# FASCICULE DE BREVET EUROPEEN

(11) **EP 1 842 257 B1**
(45) Date de publication et mention de la délivrance du brevet: **29.07.2009**
(21) Numéro de dépôt: 06709413.6
(22) Date de dépôt: 19.01.2006
(51) Int. Cl.: H01M 8/04

(54) **PROCEDE ET DISPOSITIF DE GESTION DE FONCTIONNEMENT DES MODULES DE PILES A COMBUSTIBLE**
VERFAHREN UND VORRICHTUNG ZUR BETRIEBSSTEUERUNG VON BRENNSTOFFZELLENMODULEN
METHOD AND DEVICE FOR OPERATIONAL CONTROL OF FUEL CELL MODULES

(30) Priorité: 20.01.2005 FR 0550179
(43) Date de publication de la demande: 10.10.2007
(73) Titulaire: Renault SAS, 92100 Boulogne Billancourt (FR)
(72) Inventeur: CORNET, Nathalie, F-78960 Voisins Le Bretonneux (FR)
(74) Mandataire: Guyon, Rodolphe C.
(86) Numéro de dépôt international: PCT/FR2006/050027
(87) Numéro de publication internationale: WO 2006/077348

(56) Documents cités:
- US-A1- 2003 008 184
- US-A1- 2004 202 901
- PATENT ABSTRACTS OF JAPAN vol. 011, no. 070 (E-485), 3 mars 1987 (1987-03-03) & JP 61 225775 A (AGENCY OF IND SCIENCE & TECHNOL), 7 octobre 1986 (1986-10-07)

## Description

La présente invention concerne un procédé et un dispositif de gestion de fonctionnement des modules d'une pile à combustible, notamment pour permettre de préserver sa durée de vie.

Dans l'état de la technique il a été décrit des réalisations pour stocker à bord d'un véhicule de l'énergie sous forme chimique pour la restituer à la demande sous forme d'énergie électrique fournie à un système d'entraînement électrique pour véhicule autonome.

Parmi les différents dispositifs de conversion électrochimique, se trouve la technique de la pile à combustible dans laquelle un assemblage de cellules électrochimiques restitue de l'énergie électrique à l'aide d'au moins deux espèces électrochimiques différentes. De l'énergie électrique est alors produite et consommée par au moins un moteur électrique d'entraînement du véhicule équipé.

Particulièrement, les piles à combustible utilisables dans le domaine de l'automobile sont basées sur la recombinaison de l'hydrogène et de l'oxygène, l'hydrogène pouvant être stocké à bord du véhicule, ou produit au moyen d'un reformeur à partir d'un carburant hydrogéné tel que de l'essence, ou de l'éthanol. L'oxygène à recombiner avec l'hydrogène provient de l'air ambiant.

Une cellule électrochimique pour pile à combustible peut être réalisée selon l'une parmi plusieurs techniques et parmi elles, la technique de la membrane-électrode (MEA). Cette technique est très sensible aux conditions opératoires, particulièrement quand ces conditions modifient l'hydratation de la membrane-électrode, et ce, surtout dans le cas de membranes en polymère sulfoné.

En particulier, de mauvaises conditions d'hydratation de la membrane-électrode induisent une dégradation plus rapide de la cellule au niveau de sa membrane et se traduisent par une chute régulière de la tension de l'ordre de quelques microvolts par heure.

De façon à obtenir un fonctionnement optimal en terme d'efficacité sur le système de la pile à combustible, on cherche autant que possible à travailler avec des gaz, notamment à la cathode de la pile à combustible, faiblement ou pas du tout humidifiée.

Lors d'un fonctionnement à faible charge, ce qui est souvent le cas sur le cycle complet d'utilisation en condition réelle du véhicule entraîné sur la base d'une pile à combustible, la pile ou l'empilement de cellules est utilisée de telle façon que la densité de courant délivré est faible. Or, plus la densité de courant est faible et moins la quantité d'eau produite par la pile est importante.

Cette situation est défavorable en terme de bilan d'eau. Il en résulte que le niveau d'hydratation est trop important sur les membranes-électrodes de la pile électrochimique, ce qui contribue à l'accélération de la dégradation des membranes-électrodes.

Dans des conditions de fonctionnement en régime permanent, les durées de vie de telles membranes-électrodes sont multipliées par dix quand les conditions de pression, température et domaines de fonctionnement créant des contraintes au cours du temps sur les membranes électrodes ne sont pas modifiées.

Dans ce cas, la pile de cellules électrochimiques présente un fonctionnement à une densité de courant plus importante que dans l'application à la traction électrique sur les automobiles.

Dans l'état de la technique, on a déjà proposé de travailler le problème de l'hydratation des membranes-électrodes notamment en utilisant l'évaporation des parties liquides et en évacuant l'eau liquide sur la chaussée sur laquelle se déplace le véhicule.

Mais de telles solutions conduisent à une augmentation importante de la masse de composants embarqués sur le véhicule, ce qui réduit d'autant l'efficacité du système de traction électrique.

Particulièrement, le demandeur dans une demande FR-A-2.847.722 a décrit un système de distribution de réactifs pour piles à combustible dans lequel on a décrit le problème de la formation d'eau sur un assemblage de membranes-électrodes.

La solution envisagée dans cette demande de brevet consiste à réaliser une répartition correcte de réactifs, et notamment au niveau des pressions partielles de façon à rendre plus homogène la densité de courant et de répartir aussi les pertes thermiques.

Dans cet état de la technique, le problème vient de ce que la membrane devient plus compliquée par la disposition notamment de canaux supplémentaires.

Dans la demande US-A-2004/058.206, on a décrit un procédé pour améliorer le bilan d'eau sur une pile de cellules électrochimique. Chaque cellule comporte une membrane-électrode servant d'anode. Une chambre anodique est prévue pour distribuer le gaz anodique à la cellule électrochimique et une plaque de séparation poreuse sépare une chambre de gaz cathodique avec une chambre de refroidissement de la cellule.

Dans cette disposition, de l'eau est échangée entre le gaz cathodique et le refroidissement à travers la plaque de séparation poreuse disposée entre la chambre cathodique et la chambre de refroidissement à l'aide d'un refroidissant de type aqueux et dont la pression partielle de vapeur d'eau est plus faible que celle de l'eau en fonction de la température.

Dans un document US-A-2003/215.693, on a décrit une pile à combustible permettant de réduire la chute de tension résultant de la contamination progressive de la membrane-électrode en utilisant la construction particulière d'une couche de séparation.

Dans un document DE-A-101.45.875, on a décrit une pile à combustible semi humide à membrane-électrode et dont les électrodes utilisent une couche servant de catalyseur qui est appliquée du côté de la membrane. Par sa construction et sa morphologie, cette pile favorise la rétrodiffusion de l'eau de réaction à travers l'électrolyte, ce qui garantit une humidification suffisante de l'électrolyte tout en protégeant la membrane électrode.

Dans la demande de brevet européen EP-A-1.220.345, on a décrit une cellule pour pile à combustible avec un montage membrane-électrode disposé entre deux séparateurs. Dans cet état de la technique, la membrane-électrode elle-même comporte une membrane polymérique électrolytique et deux couches électrode. Chaque couche électrode comporte une couche catalyseur et une feuille d'espacement. La demande de brevet Us 2003/0081 84 mentionne que les conditions d'opération de cellules non court-circuitées d'une pile à combustible peuvent être adaptées de manière à optimiser la densité de courant et/ou le voltage (une partie des cellules est court-circuitée lorsque par exemple un signal pour augmenter la température de fonctionnement de la pile est donné).

Dans ces différents documents de l'état de la technique, on remarque que la question de la fabrication d'eau est traitée à l'aide d'une structure spéciale de la membrane-électrode, ce qui en rend la construction plus compliquée.

La présente invention apporte remède à ces inconvénients de l'état de la technique.

En effet, l'invention concerne un procédé de gestion du fonctionnement d'une pile à combustible. Ce type de pile à combustible concernée est destiné à équiper une automobile dont le groupe motopropulseur tire au moins une partie de son énergie d'une pile à combustible à empilement de cellules.

La pile à combustible comporte donc au moins une cellule électrochimique dotée d'une membrane-électrode qui est affectée par des conditions d'hydratation déterminées. La cellule électrochimique à membrane-électrode est associée électriquement par une boîte de jonction électrique commandable à d'autres cellules électrochimiques.

Selon l'invention, le procédé comporte une étape pour constituer plusieurs groupes de cellules électrochimiques en connectant ou en déconnectant en série leurs membranes-électrodes de sorte que la densité de courant traversant au moins ladite cellule électrochimique à membrane électrode se trouve dans un intervalle prédéterminée prévu de manière à conserver, quelque soit le régime électrique de la pile à combustible, des conditions d'hydratation optimales de la membrane-électrode.

L'invention concerne aussi un dispositif de gestion du fonctionnement d'une pile à combustible pour équiper une automobile dont le groupe motopropulseur tire au moins une partie de son énergie d'une pile à combustible à empilement de cellules, qui comporte essentiellement une boîte de jonction électrique commandable et un moyen de mesure de l'humidité relative de la membrane électrode d'au moins une cellule électrochimique et un moyen pour commander la boîte de fonction électrique afin de déterminer la mise en série ou la déconnexion d'au moins un groupe de cellules électrochimiques à membranes-électrodes de façon à maintenir la densité de courant traversant au moins ladite cellule électrochimique à membrane électrode dans un intervalle prédéterminé afin de préserver la durabilité de la pile.

D'autres caractéristiques et avantages de la présente invention seront mieux compris à l'aide de la description détaillé qui va suivre et des dessins annexés parmi lesquels :
- la figure 1 est un schéma bloc représentant les éléments principaux du système de la pile à combustible ;
- la figure 2 représente un organigramme du procédé de l'invention ;
- la figure 3 représente un schéma bloc d'un système de gestion selon l'invention.

Le procédé de l'invention détermine une stratégie de fonctionnement d'une pile de cellules électrochimiques constituant une pile à combustible dans le cadre d'une application en véhicule, application dans laquelle la charge électrique n'est pas constante pendant la durée de vie de la pile à combustible.

Les ensembles membranes-électrodes (MEA = Membrane Electrode Assembly), éléments à la base des réactions électrochimiques, situés à l'intérieur de la pile à combustible, sont très sensibles aux variations de conditions de fonctionnement telles que la température, la pression et l'humidité des gaz.

Pour des membranes-électrodes (MEA) de type fluorée sulfonée, la durée de fonctionnement sans problème de ces ensembles peut-être de plusieurs milliers d'heures, voire dizaine de milliers d'heures pour une application stationnaire avec des conditions adéquates d'utilisation de la membrane-électrode (MEA) dans lesquelles notamment la charge électrique appliquée à la pile à combustible est sensiblement constante.

A la différence, dans le cadre d'une application automobile, les conditions de fonctionnement évaluées dépendent de la demande de puissance faisant suite aux conditions d'utilisation du véhicule.

Certaines conditions de fonctionnement, comme une température élevée et/ou une faible humidité, ou bien encore un fonctionnement à une tension relativement élevée et/ou une faible humidité, ou bien encore un fonctionnement à une tension relativement élevée (fable densité de courant) ont un impact important sur les phénomènes de dégradation de la membrane-électrode (MEA).

L'évolution négative de la membrane-électrode (MEA) au cours du temps s'observe par une chute de potentiel (de l'ordre du µV/h).

Suivant les conditions d'utilisation, la pente de chute de potentiel révélatrice d'une dégradation de la membrane-électrode (Mea) initiée, peut-être plus ou moins aggravée.

Le procédé de l'invention concerne un mode d'utilisation de la pile de cellules électrochimiques permettant d'éviter d'exposer la pile de cellules électrochimiques à des conditions qui risquent d'accélérer la dégradation du coeur de la pile, la membrane-électrode (MEA) et d'ainsi de réduire la durée de vie de l'ensemble de la pile de cellules électrochimiques.

En exécutant les essais de réalisation de l'invention, on s'est aperçu qu'il était alors possible d'atteindre une durée de vie de la pile de cellules électrochimiques de 5000 h en utilisation continue.

Les conditions opératoires induisant un effet notable sur la vitesse de dégradation de la membrane-électrode (MEA) sont décrites ci-dessous.

Le procédé de l'invention permet de faire fonctionner la pile de cellules électrochimiques avec une humidité de gaz la plus faible possible, du moins pour le gaz (air) envoyé à la cathode.

Dans un meilleur mode de réalisation de l'invention, on évite ainsi une étape de la plupart des procédés de gestion du fonctionnement des piles à combustible de l'état de la technique qui est une étape pour humidifier le gaz cathodique. La suppression de cette étape pour humidifier le gaz cathodique permet ainsi de produire un dispositif de gestion de pile à combustible grâce auquel on obtient :
- un gain en volume de la pile à combustible ;
- un gain en coût sur l'humidificateur à la cathode puisque la gestion de l'eau au niveau de la cathode est facilitée ; et
- un gain énergétique puisque la pile à combustible présente moins de pertes thermiques.

Or, un tel mode de fonctionnement en cathode sèche résout un problème des piles actuelles pour lesquelles la vitesse de dégradation de la plupart des membranes-électrodes (MEA) actuelles basées sur une membrane fluorée est beaucoup trop importante dans ces conditions.

Une faible humidité des gaz est d'autant plus problématique que le module fonctionne à une densité de courant faible.

En effet, la quantité d'eau produite par la réaction électrochimique à la cathode est d'autant plus importante que la densité de courant est forte. L'eau produite contribue à la préservation de l'équilibre en eau nécessaire au bon fonctionnement et au rôle principal de la membrane.

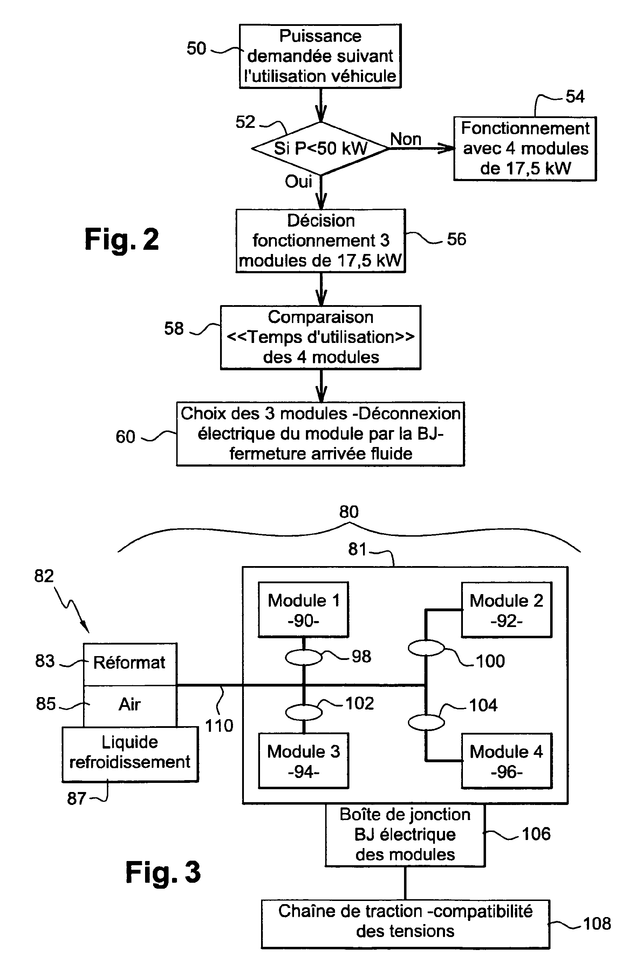

En effet, cet élément conduit les protons et sa capacité à les transporter est directement fonction de son état de gonflement en eau, c'est-à-dire au nombre de molécules d'eau par site sulfonique les sites sulfoniques étant les sites "véhiculaires" des protons. Dans un mode particulier de réalisation, le dispositif de contrôle comporte un moyen de mesure de l'humidité relative de la membrane électrode d'au moins une cellule électrochimique de sorte que le raccordement électrique désiré est exécuté par la boîte de jonction (BJ ou 106 -Figure 3).

Lors de l'utilisation en condition véhicule, la demande en puissance peut varier entre environ 10% de la pleine charge et la pleine charge typiquement de 70 kW.

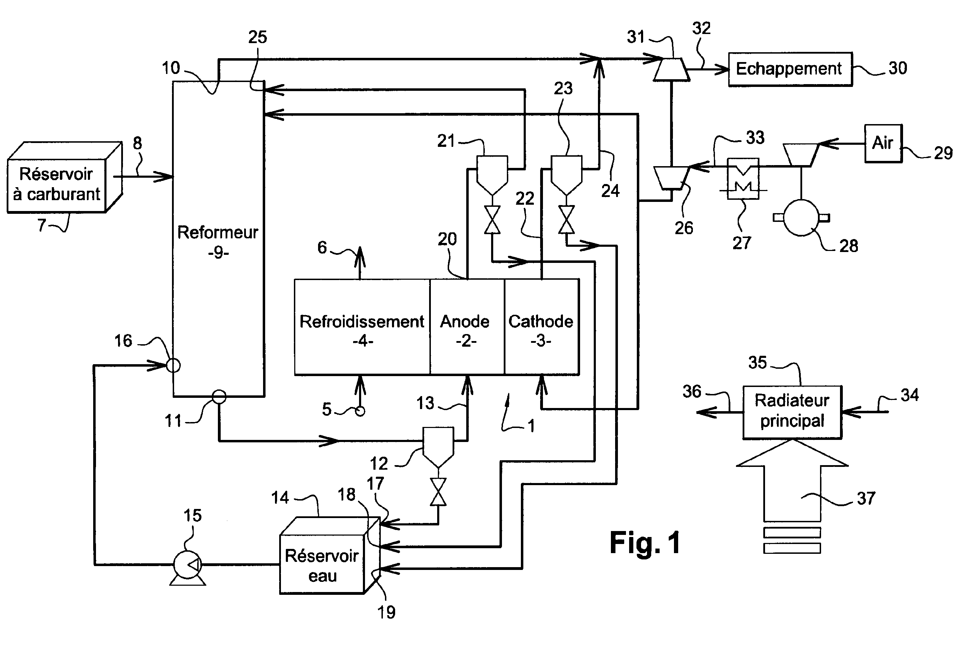

Suivant ces conditions de demande en puissance, dans la configuration actuelle de la pile à combustible, dénommé module de puissance (MdP) (figure 1) et le dimensionnement de la pile de cellules électrochimiques considéré (nombre de cellules N, surface active S, Tension V et densité de courant correspondante J, pression P et température T), le courant I délivré par la pile de cellules électrochimiques se situe dans un intervalle allant d'environ 25 A à 250 A.

Pour une pile à combustible comportant N = 400 cellules, présentant une surface active S = 312 cm², cette gamme de courants correspond à des densités de courant allant respectivement de 0,1 à 0,8 A/cm².

Le procédé de l'invention comporte une étape pour contraindre la pile, ou empilement de cellules électrochimiques à fonctionner dans un certain intervalle de densité de courant. Typiquement, dans un mode préféré de réalisation, le procédé de gestion de l'invention permet de rester dans un intervalle de densité de courant de 0,4 et 0,8 A/cm².

Ce mode de fonctionnement est, selon l'invention, appliqué à une pile de cellules électrochimiques constituée de plusieurs modules de cellules électrochimiques, chacun des modules étant électriquement connecté en série. Une cellule électrochimique apporte alors à pleine charge une tension d'environ 0,7 V. Si on veut limiter le courant à une certaine valeur pour réduire les pertes ohmiques notamment, et comme la puissance nécessaire à tracter un véhicule est de plusieurs kW, une pile à combustible nécessite plusieurs centaines de cellules électrochimiques en série.

Or, dans l'état actuel et principalement pour des raisons d'empilement et de bon fonctionnement (homogénéité), un module se limite généralement à un empilement d'une centaine de cellules au maximum.

Dans un exemple de réalisation, pour une puissance de pile de 70 kW, quatre modules de 17,5 kW sont connectés en série. Chaque module de cellules électrochimiques est formé de cent cellules élémentaires.

A la figure 1, on a représenté une pile à combustible avec reformage qui permet de générer une puissance électrique pour alimenter un moteur électrique, par exemple pour la traction d'un véhicule.

Le système comprend un reformeur 9, permettant de générer de l'hydrogène à partir d'un carburant, tel que de l'essence ou du méthanol stocké 7, 8 à bord du véhicule, une pile 1 permettant de générer la puissance électrique à partir de l'hydrogène fourni par le reformeur 9 et de l'oxygène de l'air 29, et des équipements auxiliaires, notamment un compresseur d'air 28, et un circuit de refroidissement34 -36 et 4 -6.

La pile à combustible peut être constituée d'une pluralité de cellules connectées en série pour atteindre la tension de fonctionnement de la chaîne de traction du véhicule. Le dimensionnement des cellules est fait en fonction de la puissance nominale de la chaîne de traction que l'on doit atteindre.

Une cellule de pile à combustible comprend une plaque bipolaire et un assemblage membranes-électrodes. La cellule consomme de l'hydrogène issu du reformeur 9 pour former des protons et des électrons à l'anode 2. Les protons sont transférés à travers la membrane et les électrons sont transférés par les plaques bipolaires vers le circuit électrique (non représenté à la figure 1) de sortie de la pile. A la cathode 3, l'oxygène de l'air prélevé sur l'extérieur 29 à l'aide d'un premier compresseur 28 et d'un échangeur 27 qui est connecté par un second compresseur 26, 32 d'une part à la cathode 3 et d'autre part à une entrée convenable 25 du reformeur 9. L'oxygène se combine avec les protons et les électrons pour former de l'eau recueillie dans un réservoir d'eau 19 par des accès 20 sur l'anode 2, et tiré par des dispositions connues de l'état de la technique 21-24 pour des entrées 18 et 19. Une pompe à eau renvoie l'eau sur le reformeur 9 par une entrée 16 tandis que l'eau en excès est recyclée par une sortie 11 du reformeur 9 au moyen d'un circuit de recyclage comportant une pompe 12 qui débite sur l'anode pour contrôler l'hydratation de l'anode 2 et sur une entrée 17 directe ou par l'intermédiaire d'une vanne sur le réservoir 14.

Les modules de cellules électrochimiques qui forment ensemble une pile de cellules électrochimiques, ne sont pas raccordés électriquement directement entre eux, mais leur raccordement électrique est exécuté par une boîte de jonction (BJ), associée par des moyens de raccordement électrique de cellules électrochimiques et de modules de cellules électrochimiques à l'électronique de puissance et par des moyens de commande au contrôle de commande, l'électronique de puissance et le contrôle de commande étant internes au véhicule sur lequel est disposé la pile à combustible.

Dans un mode particulier de réalisation, la boîte de jonction comporte un moyen pour isoler électriquement un ou plusieurs modules de cellules électrochimiques.

Dans un mode particulier de réalisation, le moyen pour isoler électriquement un ou plusieurs modules coopère avec un moyen pour détecter un module devenu défectueux. Lorsque le moyen pour détecter un module devenu défectueux détecte l'adresse d'un module devenu défectueux, il transmet l'adresse du module défectueux au moyen pour isoler électriquement un ou plusieurs modules qui exécute alors l'isolement électrique du module défectueux en agissant sur son raccordement électrique de manière à isoler le module défectueux de la connexion série dans le module de cellules auquel il appartient.

Dans un mode particulier de réalisation, le moyen pour détecter un module devenu défectueux comporte aussi un moyen pour signaler l'existence d'un module défectueux. Un tel signalement peut être affiché à l'aide d'un moyen de signalisation de défaillance comme un avertisseur sur le tableau de bord du véhicule.

Dans un mode particulier de réalisation, le moyen pour signaler l'existence d'un module défectueux comporte aussi un moyen pour commander l'électronique de puissance et le contrôle de commande internes au véhicule sur lequel est disposé la pile à combustible pour permettre de se servir de la puissance délivrée par les modules restants de façon à se rendre à un point de maintenance de la pile à combustible.

Dans un mode particulier de réalisation, le moyen de commande permettant de se servir de la puissance délivrée par les modules restants coopère avec un moyen pour indiquer la position géographique du point de maintenance de la pile à combustible.

Grâce à la configuration électrique des modules de cellules électrochimiques appliquée par la boîte de jonction BJ permettant d'isoler électriquement un ou plusieurs modules, le procédé de l'invention comporte une étape permettant de commander un mode de fonctionnement de la pile de cellules électrochimiques qui détermine le domaine ou l'intervalle des valeurs de densité de courant dans lequel va fonctionner la pile de cellules électrochimiques.

Dans un mode particulier de réalisation de l'invention, le dispositif de gestion de la pile à combustible comporte aussi un moyen pour commander l'état d'ouverture et/ou de fermeture de vannes d'isolement fluidique permettant d'interrompre les flux gazeux anodique et/ou cathodique accédant à une cellule et/ou à un module de cellules électrochimiques qui a été déconnecté de la pile à combustible par la boîte de jonction BJ.

Dans un mode particulier de réalisation de l'invention, l'étape pour déconnecter une cellule électrochimique et/ou un module de cellules électrochimiques est complétée par une étape d'interruption des flux gazeux anodique et cathodique pour le module à déconnecter temporairement.

Dans un mode préféré de réalisation, pour atteindre le domaine de densité de courant ciblé, le procédé consiste à faire fonctionner la pile avec un, deux, trois ou quatre modules sur quatre.

Dans un mode de réalisation, le procédé de l'invention comporte une étape pour déterminer au moins un module à déconnecter temporairement qui assurera un fonctionnement électrique de la pile à combustible dans un intervalle de densités de courant prédéterminé qui assure la durabilité de la pile à combustible.

Dans un mode particulier de réalisation, le procédé de l'invention comporte une étape préalable pour prendre en considération la compatibilité du mode de fonctionnement de la pile à combustible commandée par le procédé de l'invention à l'étape pour déconnecter au moins une cellule électrochimique et/ou un module de cellules électrochimiques, avec le mode de fonctionnement possible de l'électronique de puissance et du système de traction électrique.

Particulièrement, l'étape préalable pour prendre en considération la compatibilité du mode de fonctionnement de la pile à combustible exécute un test de compatibilité de la déconnexion en fonction des tensions opérationnelles de l'électronique de puissance et du système de traction électrique.

Dans l'état actuel, cette contrainte limite le fonctionnement possible à trois ou quatre modules sur quatre.

Sur cette base, le bénéfice d'un fonctionnement à trois modules au lieu de quatre est le suivant.

Le domaine de puissance proche de 10 kW correspond à une pression d'environ 1,5 bar pour le fonctionnement de la pile, ce qui a un impact sur sa réponse par l'intermédiaire de la courbe de polarisation.

Le dimensionnement de la pile est réalisé au départ pour la pleine charge et une pression de 3,4 bars.

Dans ces conditions, en se référant à la caractéristique tension U- densité de courant j de la pile à 1,5 bar de pression de fonctionnement, on a réalisé les configurations d'exemple avec :
- configuration A : quatre modules regroupant 400 cellules, J=0,1 A/cm², U=0,82 V, Uₘᵢₙ=328V-400V P=10 kW
- configuration B : trois modules regroupant 300 cellules, J=0,15 A/cm², U=0,8 V, Uₘᵢₙ=240V-300V P=11 kW.

Dans les exemples de réalisation des configurations A, B, et C (voir plus loin), J désigne la densité de courant par cellule, U la tension de service de chaque cellule, Umin la tension minimale de fonctionnement de la pile et P sa puissance électrique de service.

Le mode de fonctionnement en configuration B est extrêmement favorable, même si l'on ne peut pas atteindre le domaine préférentiel de densité de courant. II aurait fallu pouvoir descendre à un seul module, ce qui n'est pas possible par rapport à la comptabilité de fonctionnement avec le reste du système. Le mode de fonctionnement en configuration B permet de "sortir" de la zone instable de la réponse de la pile correspondant à la zone d'activation ; de plus, un fonctionnement à 0,8V apparaît comme un maximum car au-dessus de cette tension, la couche active et notamment les catalyseurs développés pour un fonctionnement avec un reformeur sont beaucoup plus instables et de durée de vie réduite.

II en est de même pour la membrane : le passage à 0,15 A/cm² est meilleur pour la membrane et un fonctionnement en cathode sèche que le passage à 0,1 A/cm².

La demande de puissance assez faible représente la majeure partie du temps de fonctionnement en condition réelles du système.

Cela signifie de plus que, par l'intermédiaire de ce fonctionnement avec trois modules dans des conditions de faible demande en puissance, un temps très important sur la non utilisation d'un module permet d'augmenter la durée de vie de l'ensemble pile.

Dans un mode particulier de réalisation du procédé de l'invention, l'étape de déconnexion d'une cellule électrochimique et/ou d'au moins un module de cellules électrochimiques comporte une étape pour sélectionner selon une loi de répartition du temps de déconnexion pour chaque cellule électrochimique et/ou pour chaque module déconnectable au moins une dite cellule électrochimique et/ou un dit module de cellules électrochimique de manière à répartir équitablement sur l'ensemble des cellules électrochimiques les conditions de fonctionnement en densité de courant qui permettent d'allonger leur durée de vie. En pratique cette étape consiste à faire une rotation par rapport à l'utilisation des trois modules.

Dans un mode de réalisation du dispositif de l'invention, le dispositif de gestion de la pile à combustible comporte un moyen de contrôle-commande permettant de choisir le module de cellules électrochimiques à déconnecter parmi les modules connectés de manière à allonger leur durée de vie et susceptible de répartir la durée d'utilisation avec cet objectif.

Le procédé de gestion de pile à combustible peut également être mis en pratique pour des demandes en puissance plus élevées, par exemple pour une puissance de 30 KW (en référence à la réponse U-j de la pile à une pression de fonctionnement à 2,5 bar, on a obtenu sur les configurations précédentes :
- configuration A : quatre modules regroupant 400 cellules, J=0,3 A/cm², U=0,77V, Umin=310V-400V P=30 kW,
- configuration B : trois modules représentant 300 cellules, J=0,43 A/cm², U=0,74 V, Umin=222V-400V P=30 kW.

Approximativement, la puissance de seuil permettant de décider du basculement sur trois modules au lieu de quatre est située autour de 50 kW (figure 2).

Pour des puissances supérieures, la tension de la pile pour la densité de courant correspondante permettant d'atteindre la puissance demandée, serait trop basse (impact sur le rendement du système).

Les avantages de la gestion de pile à combustible lors du fonctionnement sur trois modules sont les suivants, le procédé de l'invention permet une :
- amélioration de la durée de vie de la pile de cellules électrochimiques. Deux aspects contribuent à l'augmentation de la durée de vie de la pile de cellules électrochimiques
   ○ Le fonctionnement des trois modules dans des conditions de densité de courant et de tension favorables pour la membrane-électrode (Mea).
   ○ L'économie du fonctionnement de l'équivalent d'un module environ : gain sur le temps d'utilisation de la pile de cellules électrochimiques.
- en utilisant le procédé de gestion de l'invention, une étape de gestion permet d'atteindre un objectif de gain sur le rendement du système sur le cycle complet de fonctionnement de la pile à combustible installée sur le véhicule, en interdisant le fonctionnement à très faible densité de courant, zone correspondant au plus faible rendement du système. Pour réaliser ce mode de fonctionnement, il faut que la pile soit commandée en courant.

En effet, cela reviendrait à avoir sur les mêmes bases que précédemment pour une pression de fonctionnement à 1,5 bar :

Configuration C : deux modules regroupant 200 cellules, J=0,22 A/cm², U=0,76 V, Umin=152V-200V P=10 kW.

Une configuration de la pile telle que la configuration C permet de doubler la durée de vie de la pile de cellules électrochimiques.

A la figure 2, on a résumé un mode particulier de réalisation du procédé de l'invention sous forme d'un organigramme de diverses étapes qui sont respectivement :
Une étape 50 au cours de laquelle la puissance électrique demandée suivant l'utilisation du véhicule est estimée ; puis
Une étape 52 de test pour déterminer si la puissance estimée P est inférieure à une valeur de seuil comme 50 kW ; puis
Si le test 52 est négatif, une étape 54 obligeant un fonctionnement de la pile à combustible avec quatre modules de cent cellules électrochimiques, présentant chacun au moins le quart de la puissance maximale électrique demandable ;

Sinon, si le test 52 est positif, une étape 56 de décision d'un fonctionnement de la pile à combustible avec trois modules de cent cellules électrochimiques, présentant chacun au moins le quart de la puissance maximale électrique demandable ; puis

Une étape 58 pour déterminer le module à déconnecter en fonction de la valeur instantanée du temps d'utilisation enregistré pour chaque module de la pile à combustible ; puis

Une étape 60 de choix des trois modules qui resteront connectés avant la commande de déconnexion par la boîte de jonction BJ du module à déconnecter en fonction des diverses valeurs prises par les variables mémorisant le temps d'utilisation de chaque module de façon à optimiser la durée de vie de la pile à combustible, ladite étape 60 étant le cas échéant complétée par une étape de fermeture des arrivées de fluide sur les entrées fluidiques du module déconnecté.

A la figure 3, on a représenté un schéma bloc d'un dispositif de gestion de pile à combustible pour véhicule automobile selon l'invention.

Le dispositif comporte les dispositifs classiques de services de pile à combustible 82 déjà décrits à la Figure 1 et qui comportent essentiellement le reformeur 83, une source d'air 85 et une source de liquide de refroidissement 87. L'ensemble est placé sous le contrôle d'un calculateur de commandes 80 et comporte une pile 81 de cellules électrochimiques comme la cellule électrochimique 1 décrite à la Figure 1. Les quatre cent cellules électrochimiques sont regroupées en quatre modules 90 à 96 et sont alimentés en fluides par un réseau de distribution 110 fluidique qui distribue le flux protonique, le flux anodique et le flux de refroidissement aux cellules des quatre modules à travers des électrovannes commandés 98 à 104.

Les bornes électriques (non représentées) des cellules électrochimiques des modules 90 à 96 sont reportées par des connecteurs convenables à la boîte de jonction BJ des modules 106 de sorte que l'énergie électrique est transmise à la chaîne de traction 108 tandis que cette dernière retourne au calculateur de commandes 80 les informations de compatibilité des tensions des modules avec la tension demandée par ladite chaîne de traction pour permettre au calculateur de commandes 80 de déterminer ainsi qu'il a été décrit plus haut le module à déconnecter.

## Revendications

1. Procédé de gestion du fonctionnement d'une pile à combustible (80) du type coopérant avec un reformeur (9), dans laquelle au moins une cellule électrochimique (90-96) dotée d'une membrane-électrode est associée électriquement par une boîte de jonction électrique (106) commandable à d'autres cellules électrochimiques, **caractérisé en ce qu'**il comporte une étape pour constituer plusieurs groupes (81) de cellules électrochimiques (2, 3) en connectant ou en déconnectant en série leurs membranes-électrodes de sorte que la densité de courant (J) traversant au moins ladite cellule électrochimique à membrane électrode se trouve dans un intervalle prédéterminé prévu de manière à conserver quelque soit le régime électrique de la pile à combustible des conditions d'hydratation optimales de la membrane-électrode.

2. Procédé selon la revendication 1, **caractérisé en ce qu'**il comporte une étape permettant de commander un mode de fonctionnement de la pile (80) de cellules électrochimiques qui détermine le domaine ou l'intervalle des valeurs de densité de courant dans lequel va fonctionner la pile de cellules électrochimiques.

3. Procédé selon l'une quelconque des revendications 1 ou 2, **caractérisé en ce que,** pour atteindre le domaine de densité de courant ciblé (J), le procédé consiste à faire fonctionner la pile en connectant ou en déconnectant électriquement au moins un module parmi les modules (90-96).

4. Procédé selon la revendication 3, **caractérisé en ce qu'**il comporte une étape pour déconnecter une cellule électrochimique et/ou un module de cellules électrochimiques (90-96), complétée par une étape d'interruption des flux gazeux anodique (20, 21) et cathodique (22, 23) pour le module à déconnecter temporairement.

5. Procédé selon la revendication 1, **caractérisé en ce qu'**il comporte une étape pour déterminer au moins un module à déconnecter temporairement qui assurera un fonctionnement électrique de la pile à combustible dans un intervalle de densités de courant prédéterminé qui assure la durabilité de la pile à combustible.

6. Procédé selon la revendication 3, **caractérisé en ce qu'**il comporte une étape préalable pour prendre en considération la compatibilité du mode de fonctionnement de la pile à combustible (80) commandée à l'étape pour déconnecter au moins une cellule électrochimique et/ou un module de cellules électrochimiques, avec le mode de fonctionnement possible de l'électronique de puissance et du système de traction électrique (108).

7. Procédé selon la revendication 6, **caractérisé en ce que** l'étape préalable pour prendre en considération la compatibilité du mode de fonctionnement de la pile à combustible (80) comporte un test de compatibilité de la déconnexion en fonction des tensions opérationnelles de l'électronique de puissance et du système de traction électrique (108).

8. Dispositif de gestion du fonctionnement d'une pile à combustible (80) du type coopérant avec un reformeur (9) pour équiper une automobile dont le groupe motopropulseur tire au moins une partie de son énergie d'une pile à combustible à empilement de cellules, **caractérisé en ce qu'**il comporte une boîte de jonction commandable (106) et un moyen pour déterminer la mise en série ou la déconnexion d'au moins un groupe de cellules électrochimiques (90-96) à membranes-électrodes de façon à maintenir la densité de courant (J) traversant au moins ladite cellule électrochimique à membrane électrode dans un intervalle prédéterminé.

9. Dispositif selon la revendication 8, **caractérisé en ce qu'**il comporte un moyen de mesure de l'humidité relative de la membrane électrode d'au moins une cellule électrochimique de sorte que le raccordement électrique est exécuté par la boîte de jonction (106), associée par des moyens de raccordement électrique de cellules électrochimiques et de modules (90-96) de cellules électrochimiques à un module électronique de puissance (108) et par des moyens de commande, l'électronique de puissance et le contrôle de commande étant internes au véhicule sur lequel est disposé la pile à combustible.

10. Dispositif selon l'une quelconque des revendications 8 ou 9, **caractérisé en ce que** la boîte de jonction (106) comporte un moyen pour isoler électriquement un ou plusieurs modules (90-96) de cellules électrochimiques.

11. Dispositif selon la revendication 10, **caractérisé en ce que** le moyen pour isoler électriquement un ou plusieurs modules coopère avec un moyen pour détecter un module devenu défectueux, qui transmet l'adresse du module défectueux au moyen pour isoler électriquement un ou plusieurs modules qui exécute alors l'isolement électrique du module défectueux en agissant sur son raccordement électrique de manière à isoler le module défectueux de la connexion série dans le module de cellules auquel il appartient.

12. Dispositif selon la revendication 11, **caractérisé en ce que** le moyen pour détecter un module devenu défectueux comporte aussi un moyen pour signaler l'existence d'un module défectueux, comme un moyen de signalisation de défaillance comme un avertisseur sur le tableau de bord du véhicule.

13. Dispositif selon la revendication 11, **caractérisé en ce que** le moyen pour signaler l'existence d'un module défectueux coopère aussi un moyen pour commander l'électronique de puissance et le contrôle de commande (108) internes au véhicule sur lequel est disposé la pile à combustible pour permettre de se servir de la puissance délivrée par les modules restants (90-96) de façon à se rendre à un point de maintenance de la pile à combustible.

14. Dispositif selon la revendication 13, **caractérisé en ce que** le moyen de commande permettant de se servir de la puissance délivrée par les modules restants coopère avec un moyen pour indiquer la position géographique du point de maintenance de la pile à combustible.

15. Dispositif selon l'une quelconque des revendications 9 à 14, **caractérisé en ce qu'**il comporte aussi un moyen pour commander l'état d'ouverture et/ou de fermeture de vannes d'isolement fluidique permettant d'interrompre les flux gazeux anodique (20, 21) et/ou cathodique (22, 23) accédant à une cellule (2-3) et/ou à un module de cellules électrochimiques qui a été déconnecté de la pile à combustible par la boîte de jonction (106).

## Claims

1. Method of managing the operation of a fuel cell unit (80) of the type cooperating with a reformer (9), in which cell unit at least one electrochemical cell (90-96) provided with a membrane-electrode assembly is electrically connected via a controllable electrical junction box (106) to other electrochemical cells, **characterized in that** it includes a step for constituting several groups (81) of the electrochemical cells (2, 3) by connecting or disconnecting in series their membrane-electrode assemblies so that the current density (J) of the current passing through at least said electrochemical membrane-electrode assembly cell lies within a predetermined interval provided so as to maintain, whatever the electrical regime of the fuel cell unit, optimum membrane-electrode assembly hydration conditions.

2. Method according to Claim 1, **characterized in that** it includes a step of controlling an operating mode of the stack (80) of electrochemical cells which determines the range or interval of current density values within which the stack of electrochemical cells will operate.

3. Method according to either of Claims 1 and 2, **characterized in that**, to achieve the targeted current density (J) range, the method consists in making the cell operate by electrically connecting or disconnecting at least one module among the modules (90-96).

4. Method according to Claim 3, **characterized in that** it includes a step for disconnecting an electrochemical cell and/or a module of electrochemical cells (90-96), together with a step of interrupting the anode gas flow (20, 21) and cathode gas flow (22, 23) for the module to be temporarily disconnected.

5. Method according to Claim 1, **characterized in that** it includes a step for determining at least one module to be temporarily disconnected, which will ensure that the fuel cell unit is electrically operated within a predetermined current density range that ensures durability of the fuel cell unit.

6. Method according to Claim 3, **characterized in that** it includes a prior step for taking into consideration the compatibility of the mode of operating the fuel cell unit (8) actuated at the step for disconnecting at least one electrochemical cell and/or a module of electrochemical cells, with the possible operating mode of the power electronics and of the electric traction system (108).

7. Method according to Claim 6, **characterized in that** the prior step for taking into consideration the compatibility of the operating mode of the fuel cell unit (80) includes a test for the compatibility of the disconnection as a function of the operation of voltages of the power electronics and of the electric traction system (108).

8. System for managing the operation of a fuel cell unit (80) of the type cooperating with a reformer (9) for equipping an automobile, the propulsion unit of which derives at least some of its energy from a fuel cell unit consisting of a stack of cells, **characterized in that** it includes a controllable junction box (106) and a means for determining the series connection or the disconnection of at least one group of electrochemical membrane-electrode assembly cells (90-96) so as to maintain the current density (J) of the current passing through at least said electrochemical membrane-electrode assembly cell within a predetermined range.

9. System according to Claim 8, **characterized in that** it includes a means for measuring the relative humidity of the membrane-electrode assembly of at least one electrochemical cell so that the electrical connection is made by the junction box (106), connected by means for electrically connecting electrochemical cells and modules (90-96) of electrochemical cells to an electronic power module (108) and by control means, the power electronics and the control means being internal to the vehicle in which the fuel cell unit is placed.

10. System according to either of Claims 8 and 9,
**characterized in that** the junction box (106) includes a means for electrically isolating one or more modules (90-96) of electrochemical cells.

11. System according to Claim 10, **characterized in that** the means for electrically isolating one or more modules cooperates with a means for detecting a module that has become defective, which transmits the address of the defective module to the means for electrically isolating one or more modules, which then electrically isolates the defective module by acting on its electrical connection so as to isolate the defective module from the series connection in the module of cells to which it belongs.

12. System according to Claim 11, **characterized in that** the means for detecting a module that has become defective also includes a means for signalling the existence of a defective module, such as a failure-indicating means, such as a warning lamp on the instrument panel of the vehicle.

13. System according to Claim 11, **characterized in that** the means for indicating the existence of a defective module also cooperates with a means for controlling the power electronics and the control unit (108) that are internal to the vehicle in which the fuel cell unit is placed, so as to allow the power delivered by the remaining modules (90-96) to be used so as to go to a maintenance point of the fuel cell unit.

14. System according to Claim 13, **characterized in that** the control means for using the power delivered by the remaining modules cooperates with a means for indicating the geographical position of the maintenance point of the fuel cell unit.

15. System according to any one of Claims 9 to 14, **characterized in that** it also includes a means for opening and/or closing fluid isolation valves for interrupting the anode gas flows (20, 21) and/or cathode gas flows (22, 23) leading to a cell (2-3) and/or to a module of electrochemical cells that has been disconnected from the fuel cell unit via the junction box (106).

## Patentansprüche

1. Verfahren zur Verwaltung des Betriebs einer Brennstoffbatterie (80) vom mit einem Reformer (9) zusammenwirkenden Typ, bei der mindestens eine mit einer Membran-Elektrode versehene elektrochemische Zelle (90-96) von einem steuerbaren elektrischen Anschlusskasten (106) mit anderen elektrochemischen Zellen elektrisch verbunden wird, **dadurch gekennzeichnet, dass** es einen Schritt aufweist, um mehrere Gruppen (81) von elektrochemischen Zellen (2, 3) zu bilden, indem ihre Membranen-Elektroden in Reihe verbunden oder getrennt werden, so dass die Stromdichte (J), die mindestens die elektrochemische Zelle mit Membran-Elektrode durchquert, sich in einem vorbestimmten Bereich befindet, der vorgesehen ist, um unabhängig von der elektrischen Betriebsform der Brennstoffbatterie optimale Hydrierungsbedingungen der Membran-Elektrode beizubehalten.

2. Verfahren nach Anspruch 1, **dadurch gekennzeichnet, dass** es einen Schritt aufweist, der es ermöglicht, einen Betriebsmodus der Batterie (80) von elektrochemischen Zellen zu steuern, der das Gebiet oder den Bereich der Stromdichtewerte bestimmt, in dem die Batterie elektrochemischer Zellen arbeiten wird.

3. Verfahren nach einem der Ansprüche 1 oder 2,
**dadurch gekennzeichnet, dass** das Verfahren zum Erreichen des festgelegten Stromdichtegebiets (J) darin besteht, die Batterie zu betätigen, indem mindestens ein Modul unter den Modulen (90-96) elektrisch verbunden oder getrennt wird.

4. Verfahren nach Anspruch 3, **dadurch gekennzeichnet, dass** es einen Schritt aufweist, um eine elektrochemische Zelle und/oder ein Modul von elektrochemischen Zellen (90-96) zu trennen, vervollständigt durch einen Schritt der Unterbrechung der anodischen (20, 21) und kathodischen (22, 23) Gasströme für das zeitweise zu trennende Modul.

5. Verfahren nach Anspruch 1, **dadurch gekennzeichnet, dass** es einen Schritt aufweist, um mindestens ein zeitweise zu trennendes Modul zu bestimmen, der einen elektrischen Betrieb der Brennstoffbatterie in einem vorbestimmten Bereich von Stromdichten gewährleistet, welcher die Haltbarkeit der Brennstoffbatterie gewährleistet.

6. Verfahren nach Anspruch 3, **dadurch gekennzeichnet, dass** es einen vorhergehenden Schritt aufweist, um die Kompatibilität des Betriebsmodus der Brennstoffbatterie (80), die in dem Schritt gesteuert wird, um mindestens eine elektrochemische Zelle und/oder ein Modul von elektrochemischen Zellen zu trennen, mit dem möglichen Betriebsmodus der Leistungselektronik und des elektrischen Antriebssystems (108) zu beachten.

7. Verfahren nach Anspruch 6, **dadurch gekennzeichnet, dass** der vorhergehende Schritt der Beachtung der Kompatibilität des Betriebsmodus der Brennstoffbatterie (80) einen Kompatibilitätstest der Trennung in Abhängigkeit von den Betriebsspannungen der Leistungselektronik und des elektrischen Antriebssystems (108) aufweist.

8. Vorrichtung zur Verwaltung des Betriebs einer Brennstoffbatterie (80) vom mit einem Reformer (9) zusammenwirkenden Typ, um ein Fahrzeug zu bestücken, dessen Antriebseinheit mindestens einen Teil ihrer Energie von einer Brennstoffbatterie mit Zellenstapel nimmt, **dadurch gekennzeichnet, dass** sie einen steuerbaren Anschlusskasten (106) und eine Einrichtung aufweist, um die Reihenschaltung oder die Trennung mindestens einer Gruppe von elektrochemischen Zellen (90-96) mit Membranen-Elektroden zu bestimmen, um die Stromdichte (J) aufrechtzuerhalten, die mindestens die elektrochemische Zelle mit Membran-Elektrode in einem vorbestimmten Intervall durchquert.

9. Vorrichtung nach Anspruch 8, **dadurch gekennzeichnet, dass** sie eine Einrichtung zur Messung der relativen Feuchtigkeit der Membran-Elektrode mindestens einer elektrochemischen Zelle aufweist, so dass der elektrische Anschluss vom Anschlusskasten (106) durchgeführt wird, der von Einrichtungen für den elektrischen Anschluss von elektrochemischen Zellen und von Modulen (90-96) von elektrochemischen Zellen einem elektronischen Leistungsmodul (108) und von Steuereinrichtungen zugeordnet wird, wobei die Leistungselektronik und die Steuerkontrolle sich innerhalb des Fahrzeugs befinden, in dem die Brennstoffbatterie angeordnet ist.

10. Vorrichtung nach einem der Ansprüche 8 oder 9, **dadurch gekennzeichnet, dass** der Anschlusskasten (106) eine Einrichtung aufweist, um ein oder mehrere Module (90-96) von elektrochemischen Zellen elektrisch zu isolieren.

11. Vorrichtung nach Anspruch 10, **dadurch gekennzeichnet, dass** die Einrichtung zur elektrischen Isolierung eines oder mehrerer Module mit einer Einrichtung zur Erfassung eines defekt gewordenen Modul zusammenwirkt, die die Adresse des defekten Moduls an die Einrichtung zur elektrischen Isolierung eines oder mehrerer Module überträgt, die dann die elektrische Isolierung des defekten Moduls durchführt, indem sie auf seinen elektrischen Anschluss so einwirkt, dass das defekte Modul von der Reihenverbindung im Modul von Zellen isoliert wird, zu dem es gehört.

12. Vorrichtung nach Anspruch 11, **dadurch gekennzeichnet, dass** die Einrichtung zur Erfassung eines defekt gewordenen Moduls auch eine Einrichtung aufweist, um das Vorhandensein eines defekten Moduls anzuzeigen, wie eine Einrichtung zur Anzeige einer Störung, wie eine Warnvorrichtung auf dem Armaturenbrett des Fahrzeugs.

13. Vorrichtung nach Anspruch 11, **dadurch gekennzeichnet, dass** die Einrichtung zur Anzeige des Vorhandenseins eines defekten Moduls auch mit einer Einrichtung zusammenwirkt, um die interne Leistungselektronik und die interne Steuerkontrolle (108) des Fahrzeugs zu steuern, in dem die Brennstoffbatterie angeordnet ist, um es zu ermöglichen, sich der von den verbleibenden Modulen (90-96) gelieferten Leistung zu bedienen, um sich zu einem Wartungspunkt der Brennstoffbatterie zu begeben.

14. Vorrichtung nach Anspruch 13, **dadurch gekennzeichnet, dass** die Steuereinrichtung, die es ermöglicht, sich der von den verbleibenden Modulen gelieferten Leistung zu bedienen, mit einer Einrichtung zusammenwirkt, um die geographische Position des Wartungspunkts der Brennstoffbatterie anzuzeigen.

15. Vorrichtung nach einem der Ansprüche 9 bis 14, **dadurch gekennzeichnet, dass** sie auch eine Einrichtung aufweist, um den Öffnungs- und/oder Schließzustand von Ventilen zur fluidischen Isolierung zu steuern, was es ermöglicht, die anodischen (20, 21) und/oder kathodischen (22, 23) Gasströme zu unterbrechen, die zu einer Zelle (2-3) und/oder zu einem Modul von elektrochemischen Zellen gelangen, die/das durch den Anschlusskasten (106) von der Brennstoffbatterie getrennt wurde.
